# EUROPEAN PATENT APPLICATION

(11) **EP 4 659 993 A1**
(43) Date of publication of application: **10.12.2025**
(21) Application number: 24750644.7
(22) Date of filing: 27.01.2024
(51) Int. Cl.: B60L 50/75, B60L 58/40, H01M 8/04, B60K 6/32

(54) **POWER SUPPLY SYSTEM FOR A VEHICLE**

(30) Priority: 01.02.2023 RU 2023102204
(71) Applicant: Obshchestvo s Ogranichennoi Otvetstvennostiu "Evokargo", Moscow, 129085 (RU)
(72) Inventor: PYRKOVA, Anastasiya Borisovna, pgt. Afipskij, 353235 (RU); BUTOV, Lev Nikolaevich, Moscow, 115446 (RU); PYRKOV, Pavel Vladimirovich, Kuzneck, 442544 (RU); FEDICHEV, Ilya Mihajlovich, Moscow, 117513 (RU); POPPEL, Anton Dmitrievich, Moscow, 109125 (RU); KUZ'MIN, Maksim Nikolaevich, Chernogolovka, 142432 (RU); CHUB, Anton Vladimirovich, Chernogolovka, 142432 (RU); LEVCHENKO, Aleksej Vladimirovich, Chernogolovka, 143432 (RU); KOLESNIKOV, Dmitrii Sergeevich, Moscow, 105037 (RU); SHIPITKO, Oleg Sergeevich, poselok Moskovskiy, 108811 (RU); BOLSHAKOV, Andrej Sergeevich, Moscow, 125363 (RU)
(74) Representative: Osmans, Voldemars
(86) International application number: PCT/RU2024/050021
(87) International publication number: WO 2024/162873

(57) **Abstract**

The invention relates to devices utilizing a hydrogen fuel element for the accumulation of electricity in order to provide vehicle movement, or to function as an independent source of energy. The technical result achieved in the implementation of this invention is to increase the reliability of using hydrogen fuel cells within the vehicle's power supply system. The specified technical result is achieved due to a vehicle power supply system containing a housing, which, in turn, contains a voltage converter and a hydrogen supply module connected by nylon tubes with, at least, two fuel cells, characterized in that the housing of each fuel cell has a fan, an air filter and a fuel cell control board connected to a buffer battery via a solid-state relay; and the hydrogen supply module has an input for connecting a hydrogen storage and supply system and a low pressure reducer, the output of which is connected via a solenoid valve to nylon tubes, which, in turn, are connected to fuel cells, while the outputs of each fuel cell control board are connected to a voltage converter via the main control board, and the voltage converter is electrically connected to a traction battery and a traction electric motor of a vehicle.

## Description

### FIELD OF THE INVENTION

The invention relates to devices based on a hydrogen fuel cell for the accumulation of electricity, or for the purpose of providing vehicle movement, or functioning as an independent energy source.

### BACKGROUND

A solid polymer fuel cell is known in prior art (RF Patent No. 160133, published 03/10/2016, IPC H01M8/10, H01M8/24, H01M2/18), consisting of a membrane-electrode block, an anode, a cathode and a means for sealing, in which the membrane-electrode block contains a proton-conducting membrane with a catalyst applied to its surface on both sides; and the membrane is located between the anode gas diffusion layer and the cathode gas diffusion layer: the anode and cathode located on the outside of the membrane-electrode block are made in the form of electrically conductive plates with gas distribution channels, current terminals and windows for the supply and discharge of hydrogen as an anode gas and oxygen or air as a cathode gas; sealing agents are elastic gaskets located on the outer sides of the anode and cathode, and are equipped with fittings for supplying gasses to the windows of electrically conductive plates, while all the components of the fuel cell in their planes have peripheral holes for sealing them by tightening. The fuel cell uses a proton-conducting membrane obtained by doping sulfocationite perfluorinated membranes with inorganic dopants and having an ionic conductivity of at least 10⁻³ Cm/cm at supply gas relative humidity of 5% or more. The anode and cathode gas diffusion layers are made of porous carbon paper. Electrically conductive gas distribution plates are made of either metal or composite graphite-containing material. Supply of hydrogen as an anode gas is carried out from a high-pressure tank, or from a metal hydride tank. The supply and removal of oxygen or air as a cathode gas is carried out by controlled fans, or via convection. As part of a battery of separate fuel cells directed towards each other by the anode to the cathode, the means for their sealing in the form of elastic gaskets and current terminals from electrically conductive plates are provided only to the farthest fuel cells of the battery. Modified silicon oxide and/or salts of heteropoly acids synthesized directly in the membrane matrix are used to dope a sulfofluoropolymer proton-conducting membrane.

This analog reveals the technical features that make it possible to increase the efficiency of a fuel cell, but does not disclose the technical features of using this fuel cell as part of the vehicle's power supply system.

The patent of the Russian Federation "Fuel Cell Battery and Mobile Facility" (RF patent No. 2359367, published 06/20/2009, IPC H01M8/04, H01M8/00) is known in prior art. According to the invention, the fuel cell battery includes fuel cells, a fuel supply system for supplying fuel gas to the fuel cell, a nozzle for regulating the state of gas upstream in the fuel supply system and the downstream gas supply, and control means for actuating and controlling the nozzle during a given movement cycle. The control means sets the operation mode of the nozzle depending on the operation mode of the fuel cell. This solution implies the possibility of increasing the reliability of the fuel cells in the power supply of the vehicle due to the ability to change the fuel gas supply mode (supply pressure, etc.) depending on the operating mode of the fuel cell. However, it does not contain technical features that make it possible to increase practical reliability due to the lack of control over temperature and electrical parameters of the fuel cell operation.

A fuel cell system for a car is known from the prior art (patent CN211480197U, published 09/11/2020, IPC B60L50/70); this system contains a fuel cell block consisting of cells installed in series, with each cell comprising two bipolar plates, two catalytic layers, a proton exchange membrane and two gaskets. The bipolar plate functions as hydrogen distribution and fixation element. Each fuel cell is equipped with a hydrogen exhaust channel and an air exhaust channel. Catalytic layers are thin layers consisting of a catalyst and a catalyst carrier, which are respectively used to catalyze electrochemical reactions on the anode and cathode electrodes of the battery. The proton exchange membrane is located between two catalytic layers and is used to conduct hydrogen ions and release reaction gas. The gasket is located between the catalytic layer and the bipolar plate and mainly plays the role of a proton conductor, conducting electricity and water, and transferring heat. Moreover, the fuel cells in the fuel cell block contain fuel cell control boards. This analog is the closest to the claimed invention, and this analog allows to generate electricity for charging traction batteries in vehicles; however, it does not contain a description of the technical features that allow maintaining the necessary level of system reliability in vehicles operated under conditions of different temperature ranges, as well as technical features that allow to monitor and stabilize the output parameters of fuel cells in case of a sudden change in the applied load or when starting electrical systems of the vehicle.

### SUMMARY

The task set during the development of the claimed invention was to create an electric power supply system for a vehicle able to ensure high reliability of using hydrogen fuel cells as a source of electricity.

The technical result achieved in the implementation of this invention is to increase the reliability of using hydrogen fuel cells as part of the vehicle's power supply system.

The specified technical result is achieved by a power supply system for a vehicle containing a housing, which contains a voltage converter and a hydrogen supply module connected to at least two fuel cells by nylon tubes, while the housing of each fuel cell has a fan, an air filter and a fuel cell control board connected to a buffer battery via a solid-state relay, and the hydrogen supply module has an input for connecting hydrogen storage and supply systems and a low-pressure reducer, the output of which is connected to nylon tubes via a solenoid valve, which, in turn, are connected to fuel cells, while the outputs of each fuel cell control board are connected to a voltage converter through the main control board, and the voltage converter is electrically connected to a traction battery and a traction electric motor of a vehicle.

The technical solutions used in this invention make it possible to carry out individual control over the fuel cells condition as part of the power supply system, as well as to stabilize the output parameters of the fuel cells in case of a sudden change in the supplied load, and when starting the electrical systems of the vehicle.

The hydrogen supply module contains a low-pressure reducer capable of adjusting the inlet 35 bar pressure of hydrogen to the outlet pressure from 0.1 to 1.7 bar, and a solenoid valve through which a stream of hydrogen is supplied, distributed to the fuel cells.

To maintain the operating temperature range of the fuel cells, its design provides a temperature sensor, a control board for the fuel cell, and the ventilation system containing a fan and an air filter.

Output parameters stabilization of each fuel cell, as well as power supply to the control board, is carried out using a buffer battery located next to each fuel cell. The buffer batteries are charged at the expense of the fuel cells generated energy. Receiving information about the status and control of the buffer battery is carried out using a special board located under it. This information is then transmitted to the main control board of fuel cells.

A solid-state relay is located between the buffer battery and the fuel cell housing, which is designed to supply voltage from the buffer batteries to the fuel cell control board when starting the vehicle.

The outputs of the fuel cell housing are connected to the input of the voltage converter via the main fuel cell control board located on the housing of the first fuel cell. The voltage converter, in turn, has outputs for connecting the vehicle traction battery and electric traction motors of the vehicle.

The voltage converter is designed to increase the voltage generated by fuel cells to the voltage required to charge traction batteries by reducing current strength.

### DRAWINGS

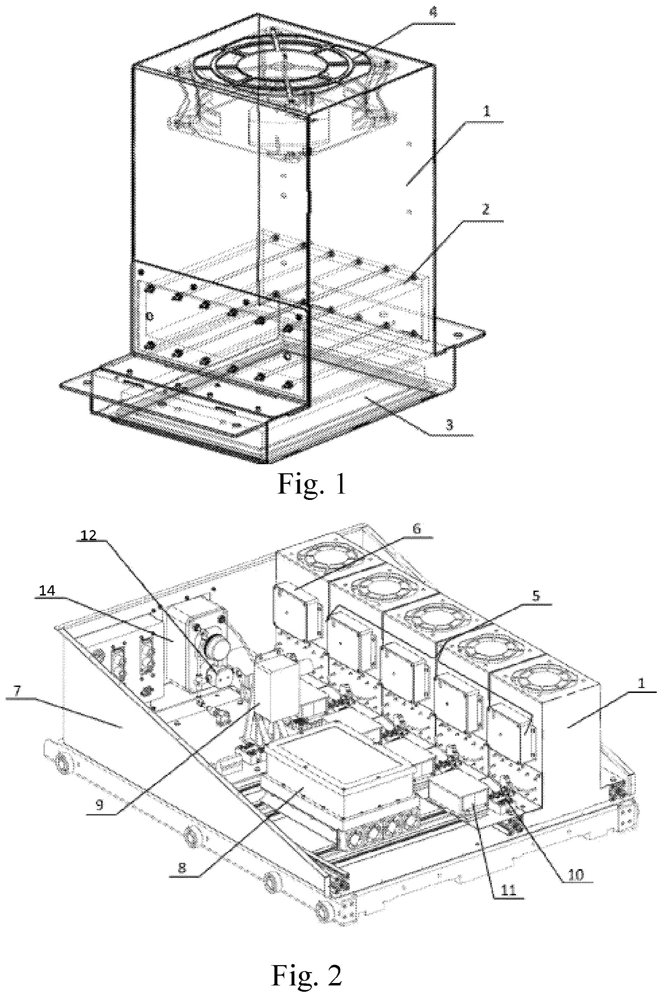

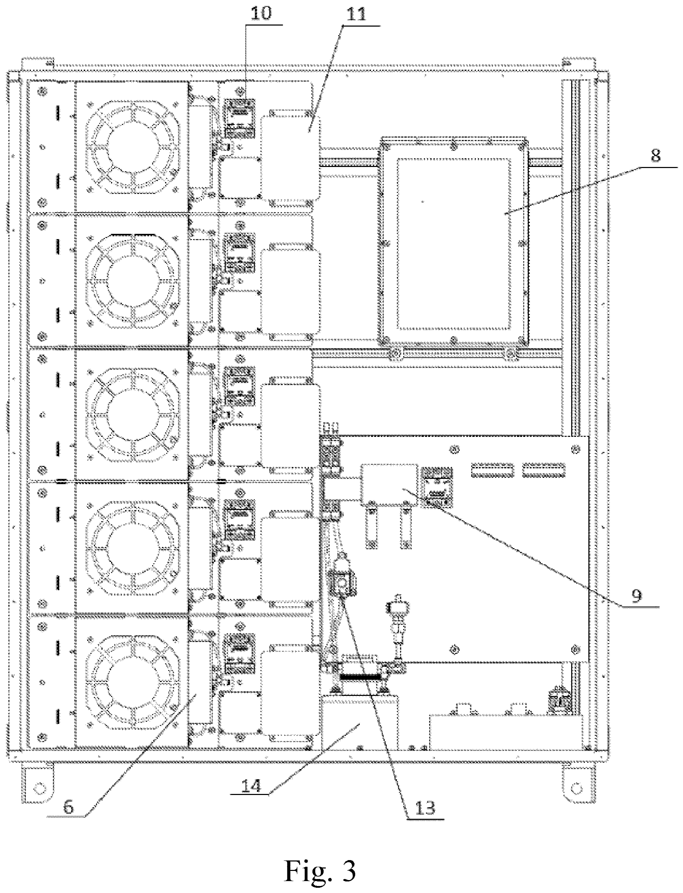

The technical essence of the invention is demonstrated in the drawings. Figure 1 shows the design of a fuel cell for an energy supply system for a vehicle; Figure 2 shows the general view of the energy supply system for a vehicle; Figure 3 shows the top view of the power supply system for a vehicle.

### DETAILED DESCRIPTION OF THE INVENTION

The power supply system for the vehicle contains:
1. Housing of fuel cell (FC)
2. Fuel cell
3. Air filter
4. Fan
5. Control boards
6. Main control board
7. Housing of power supply system
8. Voltage converter
9.Gas analyzer
10. Solid-state relay
11. Buffer battery
12. Low-pressure reducer
13. Solenoid valve
14. Hydrogen supply module

In the preferred embodiment, the invention is carried out as follows:

Fuel (hydrogen) contained in the storage and supply system is supplied to the inlet of the low-pressure reducer (12) as part of the hydrogen supply module (14), wherein the inlet pressure of 35 bar is converted to an outlet pressure from 0.1 to 1.7 bar. Next, an opening signal is sent to the solenoid valve (13) and hydrogen is distributed through nylon tubes into each of the fuel cells (2) through a special hole, and then moves along the components of the membrane electrode block. Hydrogen supplied to the anode of the membrane-electrode block undergoes an oxidation reaction (electron recoil) on the catalytic layer, after which it diffuses (i. e., it is transferred) through a proton-conducting polymer membrane to the cathode. An oxidizer is also supplied to the cathode (oxygen from the air enters the system through an air filter (3)), and air intake occurs due to a fan (4) located in the upper part of the fuel cell housing (1). Oxygen from the air on the catalytic layer undergoes redox. After that, the H⁺ cation and the O⁻² anion combine to form water molecules, while the electrons, formed in half-reactions, flow through an external circuit. The general reaction can be described by the following equations:

(1) H₂ - 2e⁻ = 2H⁺;

(2) 2O⁻² + 4e⁻= O₂;

(3) H₂ + 1/2O₂ = H₂O.

Operating temperature range for fuel cells (from 0 to +60 °C) is maintained due to the presence of a ventilation system located in each fuel cell (1) housing and a temperature sensor located in each fuel cell, the signal from which is sent to the control board (5) of the fuel cell; after that, the data is transmitted and analyzed on the main control board (6) located on the housing of the first fuel cell. To increase safety, a hydrogen gas analyzer (9) is installed in the housing of the power supply system (7), which is able to determine the minimum amounts of hydrogen, in case a leak, and give a signal to close the solenoid valve (13) and cut off fuel.

To start the fuel cell (2), there are a solid-state relay (10) and a buffer battery (11) within the power supply system (7) housing. The start is carried out by sending a control signal to a solid-state relay (10), which closes contacts and supplies electrical signals generated by the buffer battery (11) to the fuel cell control board (5). Moreover, the buffer battery (11) serves to stabilize the power generated by the fuel cell (2) in case of a sudden change in the applied load. Buffer battery (11) charging is carried with the energy generated by the fuel cell (2).

The energy generated by the fuel cell is supplied to the voltage converter (8) input, wherein the voltage is increased to the level required for charging the traction battery. For a specialist in this field, it is obvious that various changes and modifications are possible in the implementation of the claimed invention, given that they do not go beyond the scope of protection; it is also obvious that the invention can be used to obtain the described advantages in technical means other than vehicles.

## Claims

1. A vehicle power supply system containing a housing, which contains a voltage converter and a hydrogen supply module connected by nylon tubes with, at least, two fuel cells, wherein
the housing of each fuel cell has a fan, an air filter and a fuel cell control board connected to a buffer battery via a solid-state relay;
the hydrogen supply module has an input for connecting a hydrogen storage and supply system and a low-pressure reducer, the output of which is connected via a solenoid valve to nylon tubes, which are connected to fuel cells;
the outputs of each fuel cell control board are connected to a voltage converter via the main control board, and the voltage converter is electrically connected to a traction battery and a traction electric motor of a vehicle.
